# EUROPEAN PATENT APPLICATION

(11) **EP 4 826 795 A1**
(43) Date of publication of application: **21.10.2026**
(21) Application number: 24910430.8
(22) Date of filing: 21.11.2024
(51) Int. Cl.: H01M 4/58, H01M 10/0525

(54) **PREPARATION METHOD FOR POSITIVE ELECTRODE MATERIAL, POSITIVE ELECTRODE MATERIAL, POSITIVE ELECTRODE SHEET, BATTERY, AND ELECTRIC DEVICE**

(30) Priority: 28.12.2023 CN 202311840081
(71) Applicant: Contemporary Amperex Technology Co., Limited, Ningde, Fujian 352100 (CN)
(72) Inventor: LIU, Yukun, Ningde, Fujian 352100 (CN); YUAN, Tianci, Ningde, Fujian 352100 (CN); ZHANG, Xinxin, Ningde, Fujian 352100 (CN); ZHONG, Chunying, Ningde, Fujian 352100 (CN)
(74) Representative: Kraus & Lederer PartGmbB
(86) International application number: PCT/CN2024/133599
(87) International publication number: WO 2025/139496

(57) **Abstract**

The present application relates to the technical field of lithium batteries, and in particular to a preparation method for a positive electrode material, a positive electrode material, a positive electrode sheet, a battery, and an electric device. The method of the present application comprises: mixing a nitrate salt and a precursor in a solvent, and roasting to obtain a positive electrode material, wherein the precursor comprises LiFe_{(1-y)}M_{y}PO₄, wherein M comprises one or more metal elements from Group IVB, Group VB, Group VIII, Group IIA, Group IIIA, Group IVA, and Group VA, and y is 0-0.1. The method of the present application improves the electronic conductivity of the positive electrode material, and the specific capacity and the cycle stability of the battery.

## Description

The present application is based on and claims priority to Chinese Patent Application No. 202311840081.1 filed on December 28, 2023, the content of which is hereby incorporated herein by reference in its entirety.

### TECHNICAL FIELD

The present application relates to the technical field of lithium batteries, and in particular, to a preparation method for a positive electrode material, a positive electrode material, a positive electrode plate, a battery, and an electric device.

### BACKGROUND

In recent years, with the increasingly widespread application of secondary batteries, they have been extensively used in energy storage power systems such as hydropower, thermal power, wind power, and solar power stations, as well as in various fields such as electric tools, electric bicycles, electric motorcycles, electric vehicles, military equipment, and aerospace. As secondary batteries have achieved great development, higher requirements have been placed on aspects such as energy density and cycle performance.

### SUMMARY

The present application has been made in view of the above problems, and an objective thereof is to provide a preparation method for a positive electrode material, a positive electrode material, a positive electrode plate, a battery, and an electric device. According to the method of the present application, the electronic conductivity of the positive electrode material is improved, and the specific capacity and cycling stability of the battery are enhanced.

In order to achieve the above objective, a first aspect of the present application provides a method for preparing a positive electrode material. The method includes:

mixing a nitrate and a precursor in a solvent to obtain a mixture, and calcining the mixture to obtain a positive electrode material, where the precursor includes LiFe_{(1-y)}M_{y}PO₄, where M is selected from the group consisting of one or more metal elements from Group IVB, Group VB, Group VIII, Group IIA, Group IIIA, Group IVA, and Group VA, and y ranges from 0 to 0.1.

Therefore, in the present application, the nitrate is uniformly dispersed on the surface of the precursor. During the calcination process, the oxygen generated from nitrate pyrolysis oxidizes the surface of the precursor lithium iron phosphate in situ, forming an oxide layer of uniform thickness on the surface. The main components of the oxide layer are Fe₂O₃ and Li₃Fe₂(PO₄)₃. Optionally, the metal oxide generated from nitrate pyrolysis covers the surface of the precursor and mixes into the oxide layer, thereby improving the electronic conductivity of the positive electrode material and enhancing the specific capacity and cycling stability of the battery.

In any embodiment, the positive electrode material includes an inner core and a coating layer, where the inner core includes LiFe_{(1-y)}M_{y}PO₄, where M is selected from the group consisting of one or more metal elements from Group IVB, Group VB, Group VIII, Group IIA, Group IIIA, Group IVA, and Group VA, and y ranges from 0 to 0.1; the coating layer includes a metal oxide and Li₃Fe₂(PO₄)₃, where the metal oxide includes Fe₂O₃.

In any embodiment, the metal oxide is further selected from the group consisting of one or more of transition metal oxides other than iron oxides, Group IIA metal oxides, and Group IIIA metal oxides.

In any embodiment, the metal oxide is further selected from the group consisting of one or more of CuO, ZnO, MgO, MnO₂, NiO, and Al₂O₃.

Therefore, the oxygen generated from nitrate pyrolysis is oxidized with the surface of the precursor to form an oxide layer including Li₃Fe₂(PO₄)₃ and Fe₂O₃, and the metal oxide generated from nitrate pyrolysis is mixed with the oxide layer, thereby improving the electronic conductivity of the positive electrode material and enhancing the specific capacity and cycling stability of the battery.

In any embodiment, M is selected from the group consisting of one or more elements of Ti, V, Zr, Fe, Ni, Mg, Co, Ga, Sn, Sb, Nb, and Ge; and/or
y ranges from 0.001 to 0.1.

In any embodiment, a calcination temperature is 300 °C to 600 °C, optionally 350 °C to 600 °C; and/or
a calcination time is 1 h to 10 h; and/or
the calcination is performed in an inert atmosphere; and/or
a heating rate in a calcination process is 1 °C/min to 15 °C/min, optionally 4 °C/min to 10 °C/min.

Therefore, calcination under the above conditions facilitates the complete pyrolysis of the nitrate on the surface of the precursor to produce oxygen and a metal oxide, thereby helping to fully utilize the generated oxygen to oxidize the surface of the precursor to form an oxide layer and enabling the generated metal oxide to be mixed with the oxide layer. As a result, the electronic conductivity of the positive electrode material is further improved, and the specific capacity and cycling stability of the battery are further enhanced.

In any embodiment, the nitrate is selected from the group consisting of one or more of metal nitrates and ammonium nitrate.

In any embodiment, the metal nitrates are selected from the group consisting of one or more of transition metal nitrates, Group IIA metal nitrates, and Group IIIA metal nitrates; and/or
the metal nitrates are selected from the group consisting of one or more of ferric nitrate, copper nitrate, zinc nitrate, magnesium nitrate, manganese nitrate, nickel nitrate, and aluminum nitrate; and/or
the metal nitrates are capable of being dissolved in the solvent.

In any embodiment, a weight ratio of the nitrate to the precursor is 0.005:1 to 0.10:1, optionally 0.01:1 to 0.06:1.

Therefore, by adopting the nitrate type and the ratio of the nitrate to the precursor described above, it is beneficial for the oxygen generated from nitrate pyrolysis to oxidize the surface of the precursor to form an oxide layer that helps to achieve the electrochemical performance. The metal oxide generated from nitric acid pyrolysis and the oxide layer act together to improve the electronic conductivity and the interface stability of the positive electrode material, thereby enhancing the specific capacity and the cycling stability of the battery.

In any embodiment, the mixing is performed by ball milling.

In any embodiment, a rotation speed of the ball milling is 300 r/min to 500 r/min, optionally 350 r/min to 400 r/min; and/or
a ball milling time is 1 h to 10 h, optionally 1 h to 4 h.

Therefore, mixing under the above ball-milling conditions facilitates reduction in the formation of large grains by nitrate recrystallization, improves the uniform distribution of the nitrate on the surface of the precursor, and helps to form a complete and uniform oxide layer, thereby ensuring that the positive electrode material has a complete electron conduction network and facilitating the stable electrochemical performance.

In any embodiment, the nitrate is first dissolved in the solvent, then mixed with the precursor, and calcined.

Therefore, it is conducive to improving the uniformity of nitrate distribution on the surface of the precursor, thereby facilitating the formation of a coating layer of uniform thickness.

In any embodiment, after mixing and before calcination, the method further includes drying the obtained mixture,
where a drying temperature is 80 °C to 120 °C; and/or a drying time is 2 h to 12 h.

In any embodiment, a Dv50 particle size of the precursor is 0.3 µm to 5 µm, optionally 0.5 µm to 2 µm; and/or
the precursor further includes carbon, and a content of the carbon in the precursor is ≤ 0.1 wt%; and/or
the solvent is selected from the group consisting of one or more of water and an organic solvent, optionally selected from the group consisting of one or more of water, acetone, and alcohol, and more optionally selected from the group consisting of one or more of water, acetone, ethanol, isopropanol, and methanol.

A second aspect of the present application further provides a positive electrode material. The positive electrode material includes an inner core and a coating layer, where the inner core includes LiFe_{(1-y)}M_{y}PO₄, where M is selected from the group consisting of one or more metal elements from Group IVB, Group VB, Group VIII, Group IIA, Group IIIA, Group IVA, and Group VA, and y ranges from 0 to 0.1; the coating layer includes a metal oxide and Li₃Fe₂(PO₄)₃, where the metal oxide includes Fe₂O₃.

Therefore, in the present application, the nitrate is uniformly dispersed on the surface of the precursor. During the calcination process, the oxygen generated from nitrate pyrolysis oxidizes the surface of the precursor lithium iron phosphate in situ, forming an oxide layer of uniform thickness on the surface. The main components of the oxide layer are Fe₂O₃ and Li₃Fe₂(PO₄)₃. Optionally, the metal oxide generated from nitrate pyrolysis covers the surface of the precursor and mixes into the oxide layer, thereby improving the electronic conductivity of the positive electrode material and enhancing the specific capacity and cycling stability of the battery.

In any embodiment, the metal oxide is further selected from the group consisting of one or more of transition metal oxides other than iron oxides, Group IIA metal oxides, and Group IIIA metal oxides; and/or
the metal oxide is further selected from the group consisting of one or more of CuO, ZnO, MgO, MnO₂, NiO, and Al₂O₃; more optionally, the metal oxide is further selected from the group consisting of CuO and ZnO; and/or
metal nitrates corresponding to the transition metal oxides, the Group IIA metal oxides, and the Group IIIA metal oxides are capable of being dissolved in a solvent.

In any embodiment, a weight ratio of the coating layer to the inner core is 0.005:1 to 0.12:1, optionally 0.0074:1 to 0.12:1, and more optionally 0.02:1 to 0.07:1.

In any embodiment, an average thickness of the coating layer is greater than 0 and less than or equal to 15 nm, optionally 0.5 nm to 15 nm or greater than 0 and less than or equal to 5 nm, and more optionally 1 nm to 5 nm; and/or
an electronic conductivity of the positive electrode material is greater than or equal to 2 × 10⁻⁸ S/cm, optionally 2 × 10⁻⁸ S/cm to 9 × 10⁻⁶ S/cm; and/or
the inner core further includes carbon, and a weight content of the carbon in the inner core is ≤ 0.1%.

A third aspect of the present application provides a positive electrode plate. The positive electrode plate includes a positive electrode active material prepared by the method in the first aspect of the present application or the positive electrode active material in the second aspect of the present application.

A fourth aspect of the present application provides a battery. The battery includes the positive electrode plate in the third aspect of the present application.

A fifth aspect of the present application provides an electric device. The electric device includes the battery according to the fourth aspect of the present application.

### BRIEF DESCRIPTION OF THE DRAWINGS

FIG. 1 is a schematic view of a battery cell according to an embodiment of the present application.
FIG. 2 is an exploded view of the battery cell according to an embodiment of the present application shown in FIG. 1.
FIG. 3 is a schematic view of a battery module according to an embodiment of the present application.
FIG. 4 is a schematic view of a battery pack according to an embodiment of the present application.
FIG. 5 is an exploded view of the battery pack according to an embodiment of the present application shown in FIG. 4.
FIG. 6 is a schematic view of an electric device using a battery cell as a power source according to an embodiment of the present application.
FIG. 7 is a Raman spectrum (Raman shift below 500 cm⁻¹) of a surface of a positive electrode material in Example 1 of the present application.
FIG. 8 is a Raman spectrum (Raman shift above 500 cm⁻¹) of the surface of the positive electrode material in Example 1 of the present application.
FIG. 9 is an XRD diffraction spectrum of a surface of a positive electrode material in Example 16 of the present application.
FIG. 10 is an SEM image of the surface of the positive electrode material in Example 1 of the present application.
FIG. 11 is an SEM-EDS image of the surface of the positive electrode material in Example 1 of the present application.

### Description of the reference numerals:

1: battery pack; 2: upper case body; 3: lower case body; 4: battery module; 5: battery cell; 51: housing body; 52: electrode assembly; 53: top cover assembly.

### DETAILED DESCRIPTION

Hereinafter, embodiments of the preparation method for a positive electrode material, the positive electrode material, the positive electrode plate, the negative electrode plate, the battery cell, the battery module, the battery pack, and the electric device of the present application are specifically disclosed in detail with appropriate reference to the drawings. However, unnecessary detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined by lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers "between 0 and 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if a method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, Dv50 particle size according to the present application refers to the particle size at a cumulative volume distribution value of 50%.

### [Battery Cell]

Battery cells, also known as rechargeable batteries or storage batteries, refer to batteries that can continue to be used by reactivating their active materials through charging after discharging.

Typically, the battery cell includes a positive electrode plate, a negative electrode plate, a separator, and an electrolytic solution. During the charging and discharging process of the battery, active ions (such as lithium ions) are intercalated and deintercalated back and forth between the positive electrode plate and the negative electrode plate. The separator is disposed between the positive electrode plate and the negative electrode plate to primarily prevent positive and negative electrodes from short-circuiting, while allowing the passage of active ions. The electrolytic solution is between the positive electrode plate and the negative electrode plate, and primarily functions to conduct active ions.

### [Method for Preparing Positive Electrode Material]

One embodiment of the present application provides a method for preparing a positive electrode material. The method includes:
mixing a nitrate and a precursor in a solvent to obtain a mixture, and calcining the mixture to obtain a positive electrode material, where the precursor includes LiFe_{(1-y)}M_{y}PO₄, where M is selected from the group consisting of one or more metal elements from Group IVB, Group VB, Group VIII, Group IIA, Group IIIA, Group IVA, and Group VA, and y ranges from 0 to 0.1, for example, 0, 0.001, 0.003, 0.005, 0.007, 0.008, 0.01, 0.012, 0.015, 0.02, 0.023, 0.025, 0.03, 0.035, 0.04, 0.045, 0.05, 0.056, 0.06, 0.065, 0.07, 0.075, 0.08, 0.085, 0.09, 0.095, 0.098, 0.1, or a range formed by any of the above values.

Lithium iron phosphate has poor electronic conductivity and is difficult to meet industrial application requirements. Although the mechanism is still obscure, the applicant unexpectedly discovered that, in the present application, the nitrate is uniformly dispersed on the surface of the precursor. During the calcination process, the oxygen generated from nitrate pyrolysis oxidizes the surface of the precursor lithium iron phosphate in situ, forming an oxide layer of uniform thickness on the surface. The main components of the oxide layer are Fe₂O₃ and Li₃Fe₂(PO₄)₃. Optionally, the metal oxide generated from nitrate pyrolysis covers the surface of the precursor and mixes into the oxide layer, thereby improving the electronic conductivity of the positive electrode material and enhancing the specific capacity and cycling stability of the battery.

In some embodiments, the positive electrode material includes an inner core and a coating layer; the inner core includes LiFe_{(1-y)}M_{y}PO₄, where M is selected from the group consisting of one or more metal elements from Group IVB, Group VB, Group VIII, Group IIA, Group IIIA, Group IVA, and Group VA, and y ranges from 0 to 0.1, for example, 0, 0.001, 0.003, 0.005, 0.007, 0.008, 0.01, 0.012, 0.015, 0.02, 0.023, 0.025, 0.03, 0.035, 0.04, 0.045, 0.05, 0.056, 0.06, 0.065, 0.07, 0.075, 0.08, 0.085, 0.09, 0.095, 0.098, 0.1, or a range formed by any of the above values; the coating layer includes a metal oxide and Li₃Fe₂(PO₄)₃, where the metal oxide includes Fe₂O₃.

In some embodiments, the metal oxide is further selected from the group consisting of one or more of transition metal oxides other than iron oxides, Group IIA metal oxides, and Group IIIA metal oxides.

In some embodiments, the metal oxide is further selected from the group consisting of one or more of CuO, ZnO, MgO, MnO₂, NiO, and Al₂O₃, and optionally, is further selected from the group consisting of CuO and ZnO.

Therefore, the oxygen generated from nitrate pyrolysis is oxidized with the surface of the precursor to form an oxide layer including Li₃Fe₂(PO₄)₃ and Fe₂O₃, and the metal oxide generated from nitrate pyrolysis is mixed with the oxide layer, thereby improving the electronic conductivity of the positive electrode material and enhancing the specific capacity and cycling stability of the battery.

In some embodiments, M is selected from the group consisting of one or more elements of Ti, V, Zr, Fe, Ni, Mg, Co, Ga, Sn, Sb, Nb, and Ge; and/or
y ranges from 0.001 to 0.1.

In some embodiments, the calcination temperature is 300 °C to 600 °C, optionally 350 °C to 600 °C, for example, 300 °C, 310 °C, 330 °C, 350 °C, 380 °C, 400 °C, 420 °C, 450 °C, 480 °C, 500 °C, 510 °C, 530 °C, 550 °C, 570 °C, 600 °C, or a range formed by any of the above values; and/or
the calcination time is 1 h to 10 h, for example, 1 h, 2 h, 3 h, 4 h, 5 h, 6 h, 7 h, 8 h, 9 h, 10 h, or a range formed by any of the above values; and/or
the calcination is performed in an inert atmosphere; and/or
the heating rate in the calcination process is 1 °C/min to 15 °C/min, optionally 4 °C/min to 10 °C/min, for example, 1 °C/min, 2 °C/min, 3 °C/min, 4 °C/min, 5 °C/min, 6 °C/min, 7 °C/min, 8 °C/min, 9 °C/min, 10 °C/min, 11 °C/min, 12 °C/min, 13 °C/min, 14 °C/min, 15 °C/min, or a range formed by any of the above values.

Therefore, calcination under the above conditions facilitates the complete pyrolysis of the nitrate on the surface of the precursor to produce oxygen and a metal oxide, thereby helping to fully utilize the generated oxygen to oxidize the surface of the precursor to form an oxide layer and enabling the generated metal oxide to be mixed with the oxide layer. As a result, the electronic conductivity of the positive electrode material is further improved, and the specific capacity and cycling stability of the battery are further enhanced.

In some embodiments, the nitrate is selected from the group consisting of one or more of metal nitrates and ammonium nitrate.

In some embodiments, the metal nitrates are selected from the group consisting of one or more of transition metal nitrates, Group IIA metal nitrates, and Group IIIA metal nitrates; and/or
the metal nitrates are selected from the group consisting of one or more of ferric nitrate, copper nitrate, zinc nitrate, magnesium nitrate, manganese nitrate, nickel nitrate, and aluminum nitrate; and/or
the metal nitrates are capable of being dissolved in the solvent.

In some embodiments, the weight ratio of the nitrate to the precursor is 0.005:1 to 0.10:1, optionally 0.01:1 to 0.06:1, for example, 0.005:1, 0.007:1, 0.01:1, 0.012:1, 0.015:1, 0.02:1, 0.03:1, 0.04:1, 0.05:1, 0.06:1, 0.07:1, 0.08:1, 0.09:1, 0.10:1, or a range formed by any of the above values.

Therefore, by adopting the nitrate type and the ratio of the nitrate to the precursor described above, it is beneficial for the oxygen generated from nitrate pyrolysis to oxidize the surface of the precursor to form an oxide layer that helps to achieve the electrochemical performance. The metal oxide generated from nitric acid pyrolysis and the oxide layer act together to improve the electronic conductivity and the interface stability of the positive electrode material, thereby enhancing the specific capacity and the cycling stability of the battery.

In some embodiments, the mixing is performed by ball milling.

In some embodiments, the rotation speed of the ball milling is 300 r/min to 500 r/min, optionally 350 r/min to 400 r/min, for example, 300 r/min, 350 r/min, 400 r/min, 450 r/min, 500 r/min, or a range formed by any of the above values; and/or
the ball milling time is 1 h to 10 h, optionally 1 h to 4 h, for example, 1 h, 2 h, 3 h, 4 h, 5 h, 6 h, 7 h, 8 h, 9 h, 10 h, or a range formed by any of the above values.

Therefore, mixing under the above ball-milling conditions facilitates reduction in the formation of large grains by nitrate recrystallization, improves the uniform distribution of the nitrate on the surface of the precursor, and helps to form a complete and uniform oxide layer, thereby ensuring that the positive electrode material has a complete electron conduction network and facilitating the stable electrochemical performance.

In some embodiments, the nitrate is first dissolved in the solvent, then mixed with the precursor, and calcined.

Therefore, it is conducive to improving the uniformity of nitrate distribution on the surface of the precursor, thereby facilitating the formation of a coating layer of uniform thickness.

In some embodiments, after mixing and before calcination, the method further includes drying the obtained mixture.

The drying temperature is 80 °C to 120 °C, for example, 80 °C, 85 °C, 90 °C, 95 °C, 100 °C, 105 °C, 110 °C, 115 °C, 120 °C, or a range formed by any of the above values; and/or the drying time is 2 h to 12 h, for example, 2 h, 3 h, 4 h, 5 h, 6 h, 7 h, 8 h, 9 h, 10 h, 11 h, 12 h, or a range formed by any of the above values.

In some embodiments, the Dv50 particle size of the precursor is 0.3 µm to 5 µm, optionally 0.5 µm to 2 µm, for example, 0.3 µm, 0.5 µm, 0.7 µm, 1 µm, 1.2 µm, 1.5 µm, 1.7 µm, 1.8 µm, 2 µm, 2.3 µm, 2.5 µm, 3 µm, 4 µm, 5 µm, or a range formed by any of the above values; and/or
the precursor further includes carbon, and the content of the carbon in the precursor is ≤ 0.1 wt%, for example, 0.001%, 0.003%, 0.005%, 0.008%, 0.1%, or a range formed by any of the above values; and/or
the solvent is selected from the group consisting of one or more of water and an organic solvent, optionally selected from the group consisting of one or more of water, acetone, and alcohol, and more optionally selected from the group consisting of one or more of water, acetone, ethanol, isopropanol, and methanol.

### [Positive Electrode Material]

One embodiment of the present application provides a positive electrode material, including an inner core and a coating layer; the inner core includes LiFe_{(1-y)}M_{y}PO₄, where M is selected from the group consisting of one or more metal elements from Group IVB, Group VB, Group VIII, Group IIA, Group IIIA, Group IVA, and Group VA, and y ranges from 0 to 0.1, for example, 0, 0.001, 0.003, 0.005, 0.007, 0.008, 0.01, 0.012, 0.015, 0.02, 0.023, 0.025, 0.03, 0.035, 0.04, 0.045, 0.05, 0.056, 0.06, 0.065, 0.07, 0.075, 0.08, 0.085, 0.09, 0.095, 0.098, 0.1, or a range formed by any of the above values; the coating layer includes a metal oxide and Li₃Fe₂(PO₄)₃, where the metal oxide includes Fe₂O₃.

Therefore, in the present application, the nitrate is uniformly dispersed on the surface of the precursor. During the calcination process, the oxygen generated from nitrate pyrolysis oxidizes the surface of the precursor lithium iron phosphate in situ, forming an oxide layer of uniform thickness on the surface. The main components of the oxide layer are Fe₂O₃ and Li₃Fe₂(PO₄)₃. Optionally, the metal oxide generated from nitrate pyrolysis covers the surface of the precursor and mixes into the oxide layer, thereby improving the electronic conductivity of the positive electrode material and enhancing the specific capacity and cycling stability of the battery.

In some embodiments, the metal oxide is further selected from the group consisting of one or more of transition metal oxides other than iron oxides, Group IIA metal oxides, and Group IIIA metal oxides; and/or
the metal oxide is further selected from the group consisting of one or more of CuO, ZnO, MgO, MnO₂, NiO, and Al₂O₃; more optionally, the metal oxide is further selected from the group consisting of CuO and ZnO; and/or
metal nitrates corresponding to the transition metal oxides, the Group IIA metal oxides, and the Group IIIA metal oxides are capable of being dissolved in a solvent.

In some embodiments, the weight ratio of the coating layer to the inner core is 0.005:1 to 0.12:1, optionally 0.0074:1 to 0.12:1, and more optionally 0.02:1 to 0.07:1, for example, 0.005:1, 0.006:1, 0.007:1, 0.008:1, 0.01:1, 0.013:1, 0.015:1, 0.017:1, 0.02:1, 0.03:1, 0.04:1, 0.05:1, 0.06:1, 0.07:1, 0.08:1, 0.09:1, 0.1:1, 0.11:1, 0.12:1, or a range formed by any of the above values.

In some embodiments, the average thickness of the coating layer is greater than 0 and less than or equal to 15 nm, optionally 0.5 nm to 15 nm or greater than 0 and less than or equal to 5 nm, and more optionally 1 nm to 5 nm, for example, 0.2 nm, 0.5 nm, 1 nm, 2 nm, 3 nm, 4 nm, 5 nm, 6 nm, 7 nm, 8 nm, 9 nm, 10 nm, 11 nm, 12 nm, 13 nm, 14 nm, 15 nm, or a range formed by any of the above values; and/or
the electronic conductivity of the positive electrode material is greater than or equal to 2 × 10⁻⁸ S/cm, optionally 2 × 10⁻⁸ S/cm to 9 × 10⁻⁶ S/cm, for example, 2 ×10⁻⁸ S/cm, 5 × 10⁻⁸ S/cm, 7 × 10⁻⁸ S/cm, 8 × 10⁻⁸ S/cm, 1 × 10⁻⁷ S/cm, 3 × 10⁻⁷ S/cm, 5 × 10⁻⁷ S/cm, 7 × 10⁻⁷ S/cm, 8 × 10⁻⁷ S/cm, 9 × 10⁻⁷ S/cm, 1 × 10⁻⁶ S/cm, 3 × 10⁻⁶ S/cm, 5 × 10⁻⁶ S/cm, 6 × 10⁻⁶ S/cm, 8 × 10⁻⁶ S/cm, 9 × 10⁻⁶ S/cm, 1 × 10⁻⁵ S/cm, 5 × 10⁻⁵ S/cm, 8 × 10⁻⁵ S/cm, 1 × 10⁻⁴ S/cm, or a range formed by any of the above values; and/or
the inner core further includes carbon, and the weight content of the carbon in the inner core is ≤ 0.1%, for example, 0.001%, 0.003%, 0.005%, 0.008%, 0.1%, or a range formed by any of the above values.

In the present application, the average thickness of the coating layer is determined by conventional methods in the art. For example, a flat cross-section is cut out from the core of the positive electrode material using a cross-section polisher. Then, the cross-section of the positive electrode material is scanned and tested by EDS elemental analysis combined with a TEM to obtain an elemental distribution map of the cross-section. Since there is a difference between elemental distribution of the inner core and elemental distribution of the coating layer, a boundary between the inner core and the coating layer can be determined accordingly, and then the thickness of the coating layer is measured. The thickness of the coating layer is measured at different positions on the cross-section according to the above method, and the average value is calculated and recorded as the average thickness of the coating layer.

In the present application, the electronic conductivity is determined by conventional methods in the art. For example, the powder resistivity of a material is tested using a powder resistivity tester under a certain pressure. The reciprocal of the powder resistivity is taken as the electronic conductivity of the material.

### [Positive Electrode Plate]

The positive electrode plate generally includes a positive electrode current collector and a positive electrode film layer disposed on at least one surface of the positive electrode current collector. The positive electrode film layer includes a positive electrode material prepared by the above method or the above positive electrode material.

The battery, during the charging and discharging processes, undergoes deintercalation and consumption of Li, and the molar content of Li varies when the battery is discharged to different states. In the enumeration related to the positive electrode material in the present application, the molar content of Li is in an initial state of the material, i.e., a state before the material is added, and when the positive electrode material is applied to a battery system, the molar content of Li varies after charging and discharging cycles.

In the enumeration related to the positive electrode material in the present application, the molar content of O is only a theoretical value. The molar content of oxygen varies due to oxygen release from the lattice, and actually, the molar content of O fluctuates.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), or polyethylene (PE)).

In some embodiments, the positive electrode material may further include other positive electrode materials for use in batteries known in the art. As an example, the positive electrode material may include at least one of the following materials: a lithium-containing phosphate with an olivine structure, a lithium transition metal oxide, and respective modified compounds thereof. However, the present application is not limited to these materials, and other conventional materials that can be used as positive electrode materials for batteries may also be used. These positive electrode materials may be used alone or in a combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), or LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, lithium manganese phosphate (such as LiMnPO₄), a composite material of lithium manganese phosphate and carbon, and the like.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), or polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Electrolyte]

The electrolyte conducts ions between the positive electrode plate and the negative electrode plate. The present application does not specifically limit the type of the electrolyte, which may be selected based on requirements. For example, the electrolyte may be liquid, gel, or all solid.

In some embodiments, the electrolyte is liquid and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. As an example, the additive may include a negative electrode film-forming additive, a positive electrode film-forming additive, and may also include an additive capable of improving certain performance of the battery, such as an additive for improving the overcharge performance of the battery, an additive for improving the high- or low-temperature performance of the battery, or the like.

### [Separator]

In some embodiments, the battery cell further includes a separator. The present application does not particularly limit the type of the separator, and any porous-structure separator known to have good chemical stability and mechanical stability may be selected.

In some embodiments, the separator may be made of a material selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, the materials of the layers may be the same or different, which is not particularly limited.

In some embodiments, the positive electrode plate, the negative electrode plate, and the separator may be manufactured into an electrode assembly through a winding process or a stacking process.

In some embodiments, the battery cell may include an outer packaging. The outer packaging may be configured to package the electrode assembly and electrolyte described above.

In some embodiments, the outer packaging of the battery cell may be a hard housing, such as a hard plastic housing, an aluminum housing, or a steel housing. The outer packaging of the battery cell may also be a soft pack, such as a pouch-type soft pack. The soft pack may be made of plastic, and examples of the plastic may include polypropylene, polybutylene terephthalate, polybutylene succinate, and the like.

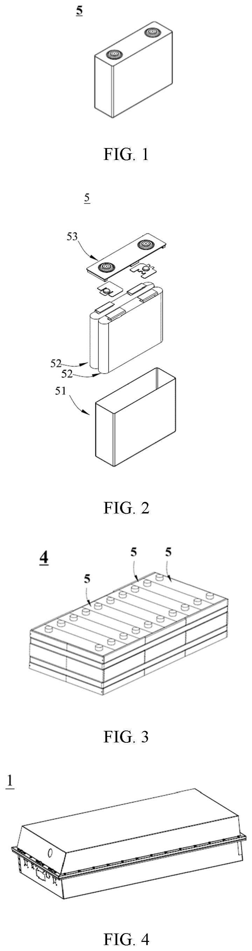

The present application does not particularly limit the shape of the battery cell, and it may have a cylindrical shape, a prismatic shape, or any other shape. For example, FIG. 1 shows a battery cell 5 having a prismatic structure as one example.

In some embodiments, referring to FIG. 2, the outer packaging may include a housing body 51 and a cover plate 53. The housing body 51 may include a bottom plate and side plates connected to the bottom plate, and the bottom plate and the side plates define, in an enclosing manner, an accommodating cavity. The housing body 51 is provided with an opening in communication with the accommodating cavity, and the cover plate 53 is capable of covering the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution wets the electrode assembly 52. The number of the electrode assemblies 52 included in the battery cell 5 may be one or more, and those skilled in the art can select the number according to specific and actual needs.

In some embodiments, the battery cell may be assembled into a battery module. The number of battery cells included in the battery module may be one or more, and the specific number may be selected by those skilled in the art based on the use and capacity of the battery module.

FIG. 3 shows a battery module 4 as one example. Referring to FIG. 3, in the battery module 4, a plurality of battery cells 5 may be sequentially arranged along the length direction of the battery module 4. Certainly, the arrangement may also be in any other manner. Further, the plurality of battery cells 5 may be fixed by fasteners.

Optionally, the battery module 4 may further include a housing having an accommodating space in which the plurality of battery cells 5 are accommodated.

In some embodiments, the battery module described above may also be assembled into a battery pack. The number of battery modules included in the battery pack may be one or more, and the specific number may be selected by those skilled in the art based on the use and capacity of the battery pack.

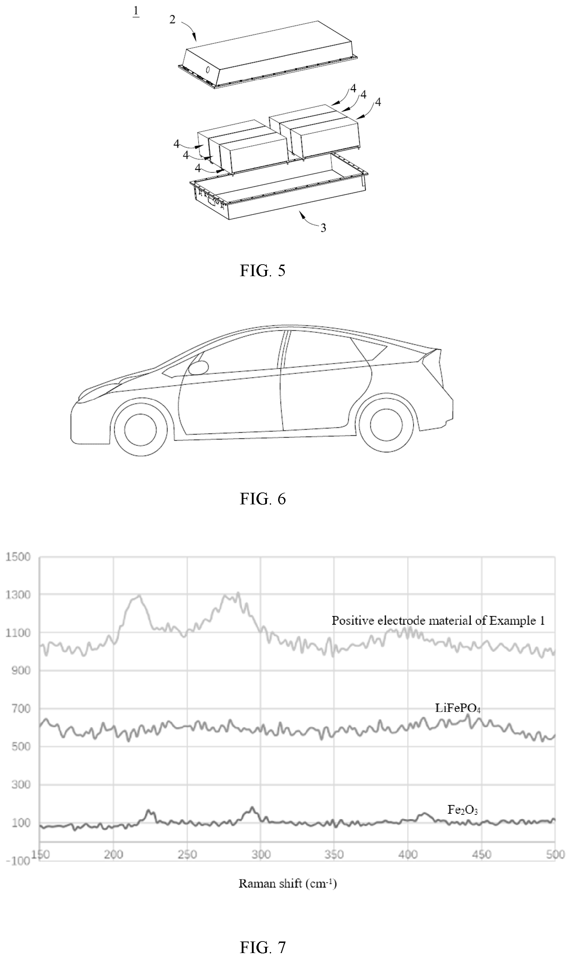

FIGs. 4 and 5 show a battery pack 1 as one example. Referring to FIGs. 4 and 5, the battery pack 1 may include a battery case and a plurality of battery modules 4 disposed in the battery case. The battery case includes an upper case body 2 and a lower case body 3. The upper case body 2 is capable of covering the lower case body 3 to form a closed space for accommodating the battery modules 4. The plurality of battery modules 4 may be arranged in any manner in the battery case.

Additionally, the present application further provides an electric device. The electric device includes at least one of the battery cell, the battery module, or the battery pack according to the present application. The battery cell, the battery module, or the battery pack can be used as a power source for the electric device, and they can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

As for the electric device, a battery cell, a battery module, or a battery pack may be selected according to usage requirements thereof.

FIG. 6 shows an electric device as one example. The electric device is a pure electric vehicle, a hybrid electric vehicle, a plug-in hybrid electric vehicle, or the like. To meet the requirements of the electric device for high power and high energy density of the battery cell, the battery pack or the battery module may be used.

### [Examples]

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### Example 1

(1) Preparation of positive electrode material: 5 g of carbon-free LiFePO₄ with a volume average particle size Dv50 of 1.4 µm was weighed, and 0.15 g of ferric nitrate, 0.05 g of copper nitrate, and 0.05 g of zinc nitrate were separately weighed at a weight ratio of ferric nitrate:zinc nitrate:copper nitrate:lithium iron phosphate of 0.03:0.01:0.01:1. The nitrates were first dissolved in a mortar containing 5 mL of alcohol (75 wt% ethanol solution), after the nitrates were fully dissolved, the lithium iron phosphate was added, and the mixture was ball-milled at a rotation speed of 500 r/min for 1 h, allowing the alcohol to evaporate completely. The obtained powder was uniformly spread in a corundum crucible with dimensions of 6 × 3 × 2 cm, the crucible was placed in a tube furnace, and Ar gas was introduced at a gas flow rate of 400 mL/min. After the system was purged with gas for half an hour, the temperature was raised at a heating rate of 5 °C/min to 400 °C, and held for 2 h, and then the positive electrode material was obtained. The electrical conductivity of the obtained powder was detected to be 1.0 × 10⁻⁷ S/cm to 1.0 × 10⁻⁶ S/cm by a powder resistivity tester, and the electrical conductivity of the unprocessed carbon-free lithium iron phosphate exceeded the maximum range of the instrument, i.e., less than 10⁻⁹ S/m.
(2) Preparation of positive electrode plate: A positive electrode active material, a binder polyvinylidene fluoride (PVDF), and a conductive agent acetylene black were dissolved in a solvent N-methylpyrrolidone (NMP) at a weight ratio of 92:5.5:2.5, and the mixture was fully stirred and uniformly mixed to prepare a positive electrode slurry. A positive electrode current collector aluminum foil was evenly coated with the positive electrode slurry, and then drying, cold pressing, and slitting were performed to obtain the positive electrode plate.
(3) Negative electrode plate: A metallic lithium foil was used as the negative electrode plate.
(4) Separator: A polypropylene film was used.
(5) Preparation of electrolytic solution: Ethylene carbonate (EC), diethyl carbonate (DEC), and dimethyl carbonate (DMC) were mixed at a volume ratio of 1:1:1, and then LiPF₆ was uniformly dissolved in the solution described above to obtain the electrolytic solution. The concentration of LiPF₆ in the electrolytic solution was 1 mol/L.
(6) Preparation of coin cell: The positive electrode plate, the separator, and the negative electrode plate described above were assembled in a glove box for coin cell assembly, and the electrolytic solution was injected to obtain the coin cell.

The secondary batteries of Examples 2 to 21 and Comparative Examples 1 and 3 were prepared using a method similar to that of Example 1. The different parameters are detailed in Table 1.

### Comparative Example 2

### (1) Preparation of positive electrode material:

Preparation of positive electrode material: 5 g of carbon-free LiFePO₄ with a volume average particle size Dv50 of 1.4 µm was weighed, and nano-iron oxide, nano-zinc oxide, and nano-copper oxide were taken (at a weight ratio of 99:43:42), where the weight ratio of the total weight of the three oxides to the carbon-free LiFePO₄ was 0.05:1. All the substances were uniformly mixed, loaded into a ball mill jar, and then ball-milled at a rotation speed of 500 r/min for 8 h with alcohol as a ball-milling medium. The obtained sample was dried in vacuum at 80 °C for 12 h to obtain the positive electrode material.

### Steps (2) to (6) were the same as those in Example 1.

**Table 1: Preparation parameters of Examples 1 to 21 and Comparative Examples 1 and 3**

| No. | Precursor | Nitrate | Weight ratio of nitrate to precursor | Dv50 particle size of precursor (µm) | Solvent | Ball milling rotation speed | Ball milling time | Temperature and time of drying | Heating rate of calcination | Calcination temperature | Calcination time |
|---|---|---|---|---|---|---|---|---|---|---|---|
| Example 1 | Carbon-free LiFePO₄ | Weight ratio of ferric nitrate to zinc nitrate to copper nitrate: 0.03:0.01:0.01 | 0.05:1 | 1.4 | Alcohol | 500 r/min | 1 h | / | 5 °C/min | 400 °C | 2 h |
| Example 2 | Carbon-free LiFePO₄ | Weight ratio of ferric nitrate to zinc nitrate to copper nitrate: 0.03:0.01:0.01 | 0.01:1 | 1.4 | Alcohol | 500 r/min | 1 h | / | 5 °C/min | 400 °C | 2 h |
| Example 3 | Carbon-free LiFePO₄ | Weight ratio of ferric nitrate to zinc nitrate to copper nitrate: 0.03:0.01:0.01 | 0.06:1 | 1.4 | Alcohol | 500 r/min | 1 h | / | 5 °C/min | 400 °C | 2 h |
| Example 4 | Carbon-free LiFePO₄ | Weight ratio of ferric nitrate to zinc nitrate to copper nitrate: 0.03:0.01:0.01 | 0.05:1 | 1.4 | Alcohol | 350 r/min | 10 h | / | 5 °C/min | 400 °C | 2 h |
| Example 5 | Carbon-free LiFePO₄ | Weight ratio of ferric nitrate to zinc nitrate to copper nitrate: 0.03:0.01:0.01 | 0.05:1 | 1.4 | Alcohol | 500 r/min | 1 h | / | 4 °C/min | 400 °C | 2 h |
| Example 6 | Carbon-free LiFePO₄ | Weight ratio of ferric nitrate to zinc nitrate to copper nitrate: 0.03:0.01:0.01 | 0.05:1 | 1.4 | Alcohol | 500 r/min | 1 h | / | 10 °C/min | 400 °C | 2 h |
| Example 7 | Carbon-free LiFePO₄ | Weight ratio of ferric nitrate to zinc nitrate to copper nitrate: 0.03:0.01:0.01 | 0.05:1 | 1.4 | Alcohol | 500 r/min | 1 h | / | 5 °C/min | 350 °C | 10 h |
| Example 8 | Carbon-free LiFePO₄ | Weight ratio of ferric nitrate to zinc nitrate to copper nitrate: 0.03:0.01:0.01 | 0.05:1 | 1.4 | Alcohol | 500 r/min | 1 h | / | 5 °C/min | 600 °C | 1 h |
| Example 9 | Carbon-free LiFe_{0.999}V_{0.00 1}PO₄ | Weight ratio of ferric nitrate to zinc nitrate to copper nitrate: 0.03:0.01:0.01 | 0.05:1 | 1.4 | Alcohol | 500 r/min | 1 h | / | 5 °C/min | 400 °C | 2 h |
| Example 10 | Carbon-free LiFe_{0.99}V_{0.1}P O₄ | Weight ratio of ferric nitrate to zinc nitrate to copper nitrate: 0.03:0.01:0.01 | 0.05:1 | 1.4 | Alcohol | 500 r/min | 1 h | / | 5 °C/min | 400 °C | 2 h |
| Example 11 | Carbon-free LiFe_{0.995}V_{0.05} PO₄ | Weight ratio of ferric nitrate to zinc nitrate to copper nitrate: 0.03:0.01:0.01 | 0.05:1 | 1.4 | Alcohol | 500 r/min | 1 h | / | 5 °C/min | 400 °C | 2 h |
| Example 12 | Carbon-free LiFePO₄ | Aluminum nitrate | 0.05:1 | 1.4 | Alcohol | 500 r/min | 1 h | / | 5 °C/min | 400 °C | 2 h |
| Example 13 | Carbon-free LiFePO₄ | Weight ratio of ferric nitrate to zinc nitrate to copper nitrate: 0.03:0.01:0.01 | 0.05:1 | 1.4 | Water | 500 r/min | 1 h | 80°C,12h | 5 °C/min | 400 °C | 2 h |
| Example 14 | LiFePO₄ (containing 0.1 wt% carbon) | Weight ratio of ferric nitrate to zinc nitrate to copper nitrate: 0.03:0.01:0.01 | 0.05:1 | 1.3 | Alcohol | 500 r/min | 1 h | / | 5 °C/min | 400 °C | 2 h |
| Example 15 | Carbon-free LiFePO₄ | Weight ratio of ferric nitrate to zinc nitrate to copper nitrate: 0.03:0.01:0.01 | 0.005:1 | 1.4 | Alcohol | 500 r/min | 1 h | / | 5 °C/min | 400 °C | 2 h |
| Example 16 | Carbon-free LiFePO₄ | Weight ratio of ferric nitrate to zinc nitrate to copper nitrate: 0.03:0.01:0.01 | 0.10:1 | 1.4 | Alcohol | 500 r/min | 1 h | / | 5 °C/min | 400 °C | 2 h |
| Example 17 | Carbon-free LiFePO₄ | Weight ratio of ferric nitrate to zinc nitrate to copper nitrate: 0.03:0.01:0.01 | 0.05:1 | 1.4 | Alcohol | 300 r/min | 1 h | / | 5 °C/min | 400 °C | 2 h |
| Example 18 | Carbon-free LiFePO₄ | Weight ratio of ferric nitrate to zinc nitrate to copper nitrate: 0.03:0.01:0.01 | 0.05:1 | 1.4 | Alcohol | 500 r/min | 0.5h | / | 5 °C/min | 400 °C | 2 h |
| Example 19 | Carbon-free LiFePO₄ | Weight ratio of ferric nitrate to zinc nitrate to copper nitrate: 0.03:0.01:0.01 | 0.05:1 | 1.4 | Alcohol | 500 r/min | 1 h | / | 15°C/min | 400 °C | 2 h |
| Example 20 | Carbon-free LiFePO₄ | Weight ratio of ferric nitrate to zinc nitrate to copper nitrate: 0.03:0.01:0.01 | 0.05:1 | 1.4 | Alcohol | 500 r/min | 1 h | / | 1 °C/min | 400 °C | 2 h |
| Example 21 | Carbon-free LiFePO₄ | Weight ratio of ferric nitrate to zinc nitrate to copper nitrate: 0.03:0.01:0.01 | 0.05:1 | 1.4 | Alcohol | 500 r/min | 1 h | / | 5 °C/min | 300 °C | 2 h |
| Comparative Example 1 | Carbon-free LiFe_{0.8}Mn_{0.2}P O₄ | Weight ratio of ferric nitrate to zinc nitrate to copper nitrate: 0.03:0.01:0.01 | 0.05:1 | 1.2 | Alcohol | 500 r/min | 1 h | / | 5 °C/min | 400 °C | 2 h |
| Comparative Example 3 | Carbon-free LiFePO₄ | / | / | 1.4 | Alcohol | 500 r/min | 1 h | / | 5 °C/min | 400 °C | 2 h |

### Material Test and Battery Test

### (1) Test of chemical component of material:

The surface of the positive electrode material was tested by Raman spectroscopy, SEM-EDS, and XRD to confirm the components in the material.

Raman spectroscopy test: A LabRAM HR Evolution laser micro-Raman spectrometer was used; a solid-state laser device with a wavelength of 523 nm was used as the light source, the beam diameter was 1.2 µm, and the power was 1 mW; Macro-Raman mode was used for the measurement; a CCD detector was used.

XRD test: A Bruker-D8advanceX-ray diffractometer from Bruker Corporation, Germany, was used; the X-Ray light source was a copper target; the wavelength was K_{α1} = 1.54056 × 10⁻¹⁰ m, and K_{α2} = 1.54439 × 10⁻¹⁰ m; the test conditions were as follows: voltage of 40 kV, current of 40 mA, anti-scatter slit of 1 mm, start angle of 15°, end angle of 70°, step size of 0.01671°, and duration per step of 0.24 s.

A Gemini360 field emission scanning electron microscope from Carl Zeiss, Germany, was used for SEM-EDS analysis under the following conditions: In-lens mode, voltage of 20 kV, aperture of 60 µm, and working distance of 8.5 mm.

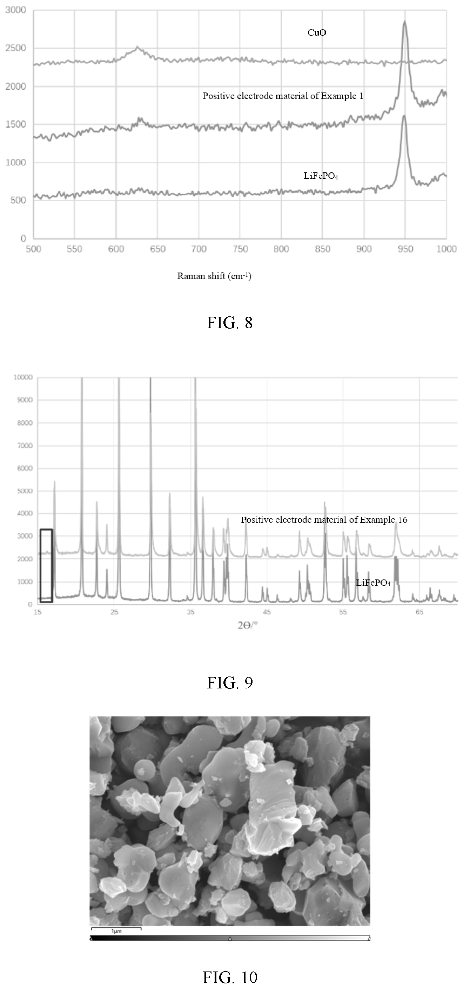

The test results show that the coating layer of the positive electrode material of Example 1 contains iron oxide and copper oxide (as shown in the Raman spectra of FIGs. 7 and 8). The SEM-EDS images show that the coating layer of the positive electrode material of Example 1 contains zinc oxide. The XRD diffraction spectrum shows that the coating layer of the positive electrode material of Example 1 contains Li₃Fe₂(PO₄)₃. Approximately, the XRD diffraction spectrum of the positive electrode material of Example 16 shows that the coating layer thereof contains Li₃Fe₂(PO₄)₃ (the peak shown in the box in FIG. 9).

### (2) Test of average thickness of coating layer of positive electrode material:

A cross-section polisher [an IB-09010CP argon ion cross-section polisher from JEOL Ltd., Japan] was used to cut a flat cross-section from the core of the positive electrode material. Then, the cross-section of the positive electrode material was scanned and tested by EDS elemental analysis combined with a TEM (an X-Max EDS from Oxford Instruments, UK, combined with a Thermo Scientific-Talos F200S G2 TEM from Thermo Fisher Scientific, USA) to obtain an elemental distribution map of the cross-section. Since there is a difference between elemental distribution of the inner core and elemental distribution of the coating layer, a boundary between the inner core and the coating layer can be determined accordingly, and then the thickness of the coating layer is measured. The thickness of the coating layer was measured at 10 different positions on the cross-section according to the above method, and the average value was calculated and recorded as the average thickness of the coating layer.

### (3) Test of coating uniformity of positive electrode material:

A Gemini360 field emission scanning electron microscope from Carl Zeiss, Germany, was used to analyze the distribution of transition metal elements on the surface of lithium iron phosphate in an SEM-EDS mode, so as to determine whether the transition metal oxide coating was uniform. Parameter setting: mode: In-lens, voltage: 20 kV, aperture: 60 µm, and working distance: 8.5 mm.

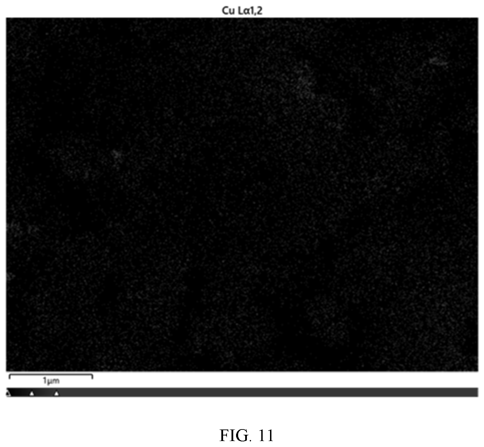

As shown in FIGs. 10 and 11, the Cu element in the coating layer of the positive electrode material in Example 1 of the present application is uniformly distributed.

### (4) Test of electronic conductivity of positive electrode material:

A powder resistivity tester (Model PRCD1100, Initial Energy Science & Technology Co., Ltd.) was used to test the powder resistivity of the positive electrode material at 100 MPa. The reciprocal of the powder resistivity was taken as the electronic conductivity of the positive electrode material.

### (5) Specific capacity test of battery:

At 25 °C, the battery was charged to 4.3 V at a constant current of 0.1C, then charged to a current of 0.01C at a constant voltage of 4.3 V, left to stand for 5 min, and then discharged to 2.0 V at 0.1C. The obtained discharge capacity was denoted as c1, and the discharge capacity obtained after one repeated cycle was denoted as c2. Three parallel samples were prepared, the average value of c2 of the three parallel samples was taken and divided by the weight of the positive electrode material to obtain the specific capacity of the battery.

### (6) Test of cycle capacity retention rate of battery:

At 25 °C, the coin cell was first charged to 4.3 V at a constant current of 0.1C, then charged to a current of 0.01C at a constant voltage of 4.3 V, left to stand for 5 min, and then discharged to 2.0 V at 0.1C. This constituted one charging and discharging cycle, and the discharge capacity of this cycle was used as the discharge capacity of the 1st cycle. The coin cell was subjected to 50 cycles of charging and discharging according to the above method, the discharge capacity of the 50th cycle was detected, and the cycle capacity retention rate of the coin cell was calculated according to the following formula.

Cycle capacity retention rate (%) of coin cell after 50 cycles = 100% × discharge capacity of the 50th cycle/discharge capacity of the 1st cycle.

**Table 2: Performance test results of Examples 1 to 21 and Comparative Examples 1 to 3**

| No. | Inner core | Coating layer | Weight ratio of coating layer to inner core | Average thickness of coating layer | Electrical conductivity (S/cm) | Specific capacity (mAh/g) | Cycle capacity retention rate after 50 cycles |
|---|---|---|---|---|---|---|---|
| Example 1 | Carbon-free LiFePO₄ | Fe₂O₃, ZnO, CuO, Li₃Fe₂(PO₄)₃ | 0.043:1 | 2nm | 8.31×10⁻⁶ | 143 | 93% |
| Example 2 | Carbon-free LiFePO₄ | Fe₂O₃, ZnO, CuO, Li₃Fe₂(PO₄)₃ | 0.015:1 | 1nm | 3.13×10⁻⁷ | 126 | 74% |
| Example 3 | Carbon-free LiFePO₄ | Fe₂O₃, ZnO, CuO, Li₃Fe₂(PO₄)₃ | 0.056:1 | 2.5nm | 4.07×10⁻⁶ | 135 | 88% |
| Example 4 | Carbon-free LiFePO₄ | Fe₂O₃, ZnO, CuO, Li₃Fe₂(PO₄)₃ | 0.043:1 | 2nm | 5.21×10⁻⁶ | 138 | 89% |
| Example 5 | Carbon-free LiFePO₄ | Fe₂O₃, ZnO, CuO, Li₃Fe₂(PO₄)₃ | 0.043:1 | 2nm | 7.13×10⁻⁶ | 140 | 90% |
| Example 6 | Carbon-free LiFePO₄ | Fe₂O₃, ZnO, CuO, Li₃Fe₂(PO₄)₃ | 0.045:1 | 2nm | 2.13×10⁻⁶ | 134 | 87% |
| Example 7 | Carbon-free LiFePO₄ | Fe₂O₃, ZnO, CuO, Li₃Fe₂(PO₄)₃ | 0.035:1 | 1.5nm | 8.76×10⁻⁷ | 130 | 86% |
| Example 8 | Carbon-free LiFePO₄ | Fe₂O₃, ZnO, CuO, Li₃Fe₂(PO₄)₃ | 0.053:1 | 2.5nm | 1.25×10⁻⁶ | 132 | 83% |
| Example 9 | Carbon-free LiFe_{0.999}V_{0.00 1}PO₄ | Fe₂O₃, ZnO, CuO, Li₃Fe₂(PO₄)₃ | 0.043:1 | 2nm | 4.13×10⁻⁶ | 135 | 88% |
| Example 10 | Carbon-free LiFe_{0.99}V_{0.1}P O₄ | Fe₂O₃, ZnO, CuO, Li₃Fe₂(PO₄)₃ | 0.043:1 | 2nm | 7.26×10⁻⁶ | 140 | 90% |
| Example 11 | Carbon-free LiFe_{0.995}V_{0.05} PO₄ | Fe₂O₃, ZnO, CuO, Li₃Fe₂(PO₄)₃ | 0.043:1 | 2nm | 4.53×10⁻⁶ | 145 | 92% |
| Example 12 | Carbon-free LiFePO₄ | Fe₂O₃, Al₂O₃, Li₃Fe₂(PO₄)₃ | 0.049:1 | 2nm | 8.73×10⁷ | 131 | 80% |
| Example 13 | Carbon-free LiFePO₄ | Fe₂O₃, ZnO, CuO, Li₃Fe₂(PO₄)₃ | 0.043:1 | 2nm | 4.74×10⁻⁶ | 136 | 88% |
| Example 14 | LiFePO₄ (containing 0.1 wt% carbon) | Fe₂O₃, ZnO, CuO, Li₃Fe₂(PO₄)₃ | 0.043:1 | 2nm | 5.01×10⁻⁶ | 137 | 89% |
| Example 15 | Carbon-free LiFePO₄ | Fe₂O₃, ZnO, CuO, Li₃Fe₂(PO₄)₃ | 0.0074:1 | <1nm | 2.35×10⁻⁸ | 110 | 70% |
| Example 16 | Carbon-free LiFePO₄ | Fe₂O₃, ZnO, CuO, Li₃Fe₂(PO₄)₃ | 0.12:1 | 5nm | 1.36×10⁻⁶ | 123 | 80% |
| Example 17 | Carbon-free LiFePO₄ | Fe₂O₃, ZnO, CuO, Li₃Fe₂(PO₄)₃ | 0.043:1 | 1.5nm | 1.86×10⁻⁶ | 133 | 85% |
| Example 18 | Carbon-free LiFePO₄ | Fe₂O₃, ZnO, CuO, Li₃Fe₂(PO₄)₃ | 0.043:1 | 2nm | 3.96x10⁻⁶ | 135 | 88% |
| Example 19 | Carbon-free LiFePO₄ | Fe₂O₃, ZnO, CuO, Li₃Fe₂(PO₄)₃ | 0.043:1 | 2.5nm | 8.56×10⁻⁷ | 130 | 86% |
| Example 20 | Carbon-free LiFePO₄ | Fe₂O₃, ZnO, CuO, Li₃Fe₂(PO₄)₃ | 0.043:1 | 2nm | 1.26×10⁻⁶ | 132 | 83% |
| Example 21 | Carbon-free LiFePO₄ | Fe₂O₃, ZnO, CuO, Li₃Fe₂(PO₄)₃ | 0.031:1 | 1.5nm | 4.36×10⁻⁷ | 127 | 75% |
| Comparative Example 1 | Carbon-free LiFe_{0.8}Mn_{0.2}P O₄ | Fe₂O₃, ZnO, CuO, Li₃Fe₂(PO₄)₃ | 0.043:1 | 2nm | 1.23×10⁻⁸ | 108 | 68% |
| Comparative Example 2 | Carbon-free LiFePO₄ | Fe₂O₃, ZnO, CuO | 0.05:1 | 3nm | 1.35×10⁻⁷ | 107 | 65% |
| Comparative Example 3 | Carbon-free LiFePO₄ | / | / | / | 8.31×10⁻⁹ | 26 | 20% |

According to the results described above, it can be seen that:
Compared with Comparative Example 1 in which y is greater than 0.1, Examples 1 to 11 and 13 to 21 of the present application show higher electronic conductivity of the positive electrode materials, and larger specific capacity and higher cycle performance of the batteries.
Compared with Comparative Example 2 in which the positive electrode material with LiFePO₄ being coated with Fe₂O₃, ZnO, and CuO is prepared by a conventional method, Examples 1 to 8 and 13 to 21 of the present application show larger specific capacity and higher cycle performance of the batteries.
Compared with Comparative Example 3 in which the positive electrode material without a coating layer is used, Examples 1 to 8 and 12 to 21 of the present application show higher electronic conductivity of the positive electrode materials, and larger specific capacity and higher cycle performance of the batteries.
Compared with Example 15 in which a lower weight ratio of the nitrate to the precursor is used, Examples 1 to 3 of the present application show higher electronic conductivity of the positive electrode materials, and larger specific capacity and higher cycle performance of the batteries. Compared with Example 16 in which a higher weight ratio of the nitrate to the precursor is used, Examples 1 to 3 of the present application show larger specific capacity of the batteries.
Compared with Example 17 in which a lower ball milling rotation speed is used and Example 18 in which a shorter ball milling time is used, Examples 1 and 4 of the present application show higher electronic conductivity of the positive electrode materials, and larger specific capacity and higher cycle performance of the batteries.
Compared with Example 19 in which a higher calcination heating rate is used and Example 20 in which a lower calcination heating rate is used, Examples 1, 5, and 6 of the present application show higher electronic conductivity of the positive electrode materials, and larger specific capacity and higher cycle performance of the batteries.
Compared with Example 20 in which a lower calcination temperature is used, Examples 1, 7, and 8 of the present application show higher electronic conductivity of the positive electrode materials, and larger specific capacity and higher cycle performance of the batteries.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A method for preparing a positive electrode material, comprising:
mixing a nitrate and a precursor in a solvent to obtain a mixture, and calcining the mixture to obtain a positive electrode material, wherein the precursor comprises LiFe_{(1-y)}M_{y}PO₄, wherein M is selected from the group consisting of one or more metal elements from Group IVB, Group VB, Group VIII, Group IIA, Group IIIA, Group IVA, and Group VA, and y ranges from 0 to 0.1.

2. The method according to claim 1, wherein the positive electrode material comprises an inner core and a coating layer; the inner core comprises LiFe_{(1-y)}M_{y}PO₄, wherein M is selected from the group consisting of one or more metal elements from Group IVB, Group VB, Group VIII, Group IIA, Group IIIA, Group IVA, and Group VA, and y ranges from 0 to 0.1; the coating layer comprises a metal oxide and Li₃Fe₂(PO₄)₃, wherein the metal oxide comprises Fe₂O₃.

3. The method according to claim 2, wherein the metal oxide is further selected from the group consisting of one or more of transition metal oxides other than iron oxides, Group IIA metal oxides, and Group IIIA metal oxides.

4. The method according to claim 2 or 3, wherein the metal oxide is further selected from the group consisting of one or more of CuO, ZnO, MgO, MnO₂, NiO, and Al₂O₃.

5. The method according to any one of claims 1 to 4, wherein M is selected from the group consisting of one or more elements of Ti, V, Zr, Fe, Ni, Mg, Co, Ga, Sn, Sb, Nb, and Ge; and/or
y ranges from 0.001 to 0.1.

6. The method according to any one of claims 1 to 5, wherein a calcination temperature is 300 °C to 600 °C; and/or
a calcination time is 1 h to 10 h; and/or
the calcination is performed in an inert atmosphere; and/or
a heating rate in a calcination process is 1 °C/min to 15 °C/min.

7. The method according to any one of claims 1 to 6, wherein the nitrate is selected from the group consisting of one or more of metal nitrates and ammonium nitrate.

8. The method according to claim 7, wherein the metal nitrates are selected from the group consisting of one or more of transition metal nitrates, Group IIA metal nitrates, and Group IIIA metal nitrates; and/or
the metal nitrates are selected from the group consisting of one or more of ferric nitrate, copper nitrate, zinc nitrate, magnesium nitrate, manganese nitrate, nickel nitrate, and aluminum nitrate; and/or
the metal nitrates are capable of being dissolved in the solvent.

9. The method according to any one of claims 1 to 8, wherein a weight ratio of the nitrate to the precursor is 0.005:1 to 0.10:1.

10. The method according to any one of claims 1 to 9, wherein the mixing is performed by ball milling.

11. The method according to claim 10, wherein a rotation speed of the ball milling is 300 r/min to 500 r/min; and/or
a ball milling time is 1 h to 10 h.

12. The method according to any one of claims 1 to 11, wherein the nitrate is first dissolved in the solvent, then mixed with the precursor, and calcined.

13. The method according to any one of claims 1 to 12, wherein after mixing and before calcination, the method further comprises drying the obtained mixture,
wherein a drying temperature is 80 °C to 120 °C; and/or a drying time is 2 h to 12 h.

14. The method according to any one of claims 1 to 13, wherein
a Dv50 particle size of the precursor is 0.3 µm to 5 µm; and/or
the precursor further comprises carbon, and a content of the carbon in the precursor is ≤ 0.1 wt%; and/or
the solvent is selected from the group consisting of one or more of water and an organic solvent.

15. A positive electrode material, comprising an inner core and a coating layer, wherein the inner core comprises LiFe_{(1-y)}M_{y}PO₄, wherein M is selected from the group consisting of one or more metal elements from Group IVB, Group VB, Group VIII, Group IIA, Group IIIA, Group IVA, and Group VA, and y ranges from 0 to 0.1; the coating layer comprises a metal oxide and Li₃Fe₂(PO₄)₃, wherein the metal oxide comprises Fe₂O₃.

16. The positive electrode material according to claim 15, wherein the metal oxide is further selected from the group consisting of one or more of transition metal oxides other than iron oxides, Group IIA metal oxides, and Group IIIA metal oxides; and/or
the metal oxide is further selected from the group consisting of one or more of CuO, ZnO, MgO, MnO₂, NiO, and Al₂O₃; and/or
metal nitrates corresponding to the transition metal oxides, the Group IIA metal oxides, and the Group IIIA metal oxides are capable of being dissolved in a solvent.

17. The positive electrode material according to claim 15 or 16, wherein a weight ratio of the coating layer to the inner core is 0.005:1 to 0.12:1.

18. The positive electrode material according to any one of claims 15 to 17, wherein an average thickness of the coating layer is greater than 0 and less than or equal to 15 nm; and/or
an electronic conductivity of the positive electrode material is greater than or equal to 2 × 10⁻⁸ S/cm; and/or
the inner core further comprises carbon, and a weight content of the carbon in the inner core is ≤ 0.1%.

19. A positive electrode plate, comprising a positive electrode material prepared by the method according to any one of claims 1 to 14 or the positive electrode material according to any one of claims 15 to 18.

20. A battery, comprising the positive electrode plate according to claim 19.

21. An electric device, comprising the battery according to claim 20.
